Europäisches Patentamt

European Patent Office

Office européen des brevets

(19)

(11) **EP 0 682 043 B1**

(12) ## EUROPEAN PATENT SPECIFICATION

(45) Date of publication and mention
of the grant of the patent:
**01.03.2000   Bulletin 2000/09**

(51) Int Cl.[7]: **C08F 14/06**

(21) Application number: **95303115.0**

(22) Date of filing: **09.05.1995**

(54) **Processes for preparing vinyl chloride polymers**

Verfahren zur Herstellung von Vinylchloridpolymeren

Procédé pour la préparation des polymères de chlorure de vinyle

(84) Designated Contracting States:
**DE FR GB NL PT**

(30) Priority: **10.05.1994   JP 12067694**

(43) Date of publication of application:
**15.11.1995   Bulletin 1995/46**

(73) Proprietor: **SHIN-ETSU CHEMICAL CO., LTD.**
**Chiyoda-ku Tokyo (JP)**

(72) Inventors:
 • **Kobayashi, Takashi,**
 **c/o PVC Technical Res. Center**
 **Kamisu-machi, Kashima-gun, Ibaraki-ken (JP)**
 • **Sugiyama, Yasuo,**
 **c/o PVC Technical Res. Center**
 **Kamisu-machi, Kashima-gun, Ibaraki-ken (JP)**
 • **Nakano, Toshihiko,**
 **c/o PVC Technical Res. Center**
 **Kamisu-machi, Kashima-gun, Ibaraki-ken (JP)**
 • **Takahashi, Yasuhiro,**
 **c/o PVC Technical Res. Center**
 **Kamisu-machi, Kashima-gun, Ibaraki-ken (JP)**
 • **Okuno, Yoshitaka,**
 **c/o PVC Technical Res. Center**
 **Kamisu-machi, Kashima-gun, Ibaraki-ken (JP)**

 • **Ohnishi, Shuji, c/o PVC Technical Res. Center**
 **Kamisu-machi, Kashima-gun, Ibaraki-ken (JP)**

(74) Representative: **Stoner, Gerard Patrick et al**
 **MEWBURN ELLIS**
 **York House**
 **23 Kingsway**
 **London WC2B 6HP (GB)**

(56) References cited:
 • **Database WPIL on Questel, week 9228, London: Derwent Publications Ltd., AN 92-230590, Class A14; & JP,A,4-154807 (KUREHA CHEM IND CO LTD et al.).**
 • **Database WPIL on Questel, week 9349, London: Derwent Publications Ltd., AN 93-392673, Class A14; & JP,A,5-295007 (KUREHA CHEM IND CO LTD et al.).**
 • **Database WPIL on Questel, week 9228, London: Derwent Publications Ltd., AN 92-230589, Class A14; & JP,A,4-154806 (KUREHA CHEM IND CO LTD et al.).**
 • **Database WPIL on Questel, week 9307, London: Derwent Publications Ltd., AN 93-55219, Class A14; & JP,A,5-5007 (KUREHA CHEM IND CO LTD et al.).**

**Description**

This invention relates to a process for preparing a vinyl chloride polymer and more particularly, to a process for suspension polymerizing a vinyl chloride monomer (vinyl chloride or a mixture of vinyl chloride with a minor proportion of another copolymerizable monomer) in a reactor equipped with heating/cooling means, typically a jacket.

Suspension polymerization of a vinyl chloride monomer is generally effected batchwise. A polymerizing reactor or polymerizer equipped with a jacket for passing a cooling medium and a reflux condenser is charged with water, a suspending agent, a polymerization initiator, a vinyl chloride monomer, and other additives. With stirring, the mixture charged in the reactor is heated to a predetermined polymerization temperature by passing heating water through the jacket around the reactor. Thereafter, polymerization proceeds while reaction heat resulting from exothermic polymerization reaction of the vinyl chloride monomer is removed by passing cooling water through the jacket and the reflux condenser such that the mixture charged in the reactor may be maintained at the predetermined temperature.

In order to increase the productivity of vinyl chloride polymers per batch, the reactor must be increased in size. In the commercial manufacture of vinyl chloride polymers, large-size reactors having an interior volume of 20 cubic meters or more are often used which are surrounded by a jacket for passing a heating or cooling medium therethrough and equipped at the top with a reflux condenser.

As mentioned above, the reactor charged with vinyl chloride monomer and other necessary ingredients is heated to the predetermined polymerization temperature by circulating a heating medium through the jacket for heating the charge. Understandably the area of the jacket available for heat transfer to the charge decreases as the size of the reactor increases. Therefore, where reactors sized as large as mentioned above are used, the time taken for heating the charge to the predetermined polymerization temperature, that is, heating time, is very long.

Then for the purpose of improving the productivity of vinyl chloride polymers, it is desired to accomplish not only enlargement of a reactor in size, but also reduction of a heating time.

The heating time can be reduced, for example, if the temperature of the mixed charge in the reactor becomes the predetermined polymerization temperature when the reactor is charged with water, suspending agent, and vinyl chloride monomer. This can be achieved by preheating water, suspending agent, and vinyl chloride monomer, charging the reactor therewith, and adding a polymerization initiator for initiating polymerization. This method can reduce the heating time. If the predetermined polymerization temperature is above 45°C, however, the resulting vinyl chloride polymer contains more fisheyes and lowers in quality.

It was also proposed to reduce the heating time by passing a heating medium above 90°C through the jacket. This method has the drawbacks that polymeric scale builds up on the reactor wall and the resulting vinyl chloride polymer contains more fisheyes.

Since the area of the jacket available for heat transfer to the charge decreases as the size of the reactor increases as previously mentioned, the reduction of the heating time by these methods becomes smaller with an increasing size of reactor. These methods are less effective with reactors of larger size.

One known method for preventing polymeric scale buildup is by applying a polymer scale inhibitor to the inner wall of the reactor. See e.g. US-A-4661569. Application of such a scale inhibitor alone is not fully effective for preventing polymer scale buildup and reducing fisheyes.

Other proposals for improving polymerisation time while seeking to avoid scale and fisheye formation have involved controlling the stirring power at various stages of the process: see JP-A-4/154806, JP-A-4/154807, JP-A-5/050007.

The general aim herein is to provide new and useful processes for preparing vinyl chloride polymers, in particular a process for preparing a vinyl chloride polymer by suspension polymerizing a vinyl chloride monomer in a reactor having a heating/cooling jacket at a polymerization temperature of 45 to 70°C, such that the heating time taken until the predetermined polymerization temperature is reached can be reduced even when the reactor is increased in size, and build-up of polymeric scale in the reactor is kept low, to produce a vinyl chloride polymer of quality, which can be shaped into a sheet with few or no fisheyes, in an efficient manner.

In known processes, even in JP-A-5/295007 where the heating medium is controlled to below 80°C, the charge mixture is heated after a polymerization initiator is admitted, that is, substantially after initiation of polymerization, by means of heating means at a considerably higher temperature than the predetermined polymerization temperature.

According to our invention herein, however, an oil-soluble polymerization initiator which is active at lower temperature is additionally used whereby heat of. polymerization reaction is utilized for heating the charge mixture to the predetermined polymerization temperature. The heating temperature of heating medium which is passed through a jacket can then be less, and is maintained between the charging/mixing temperature and the polymerization temperature plus 4°C. These features allow the heating time to be reduced. We have found that in this way vinyl chloride polymer of quality with minimized fisheyes can be produced in a highly efficient manner without buildup of polymeric scale.

Accordingly, the invention as set out in claim 1 provides a process for preparing a vinyl chloride polymer by suspension polymerizing a vinyl chloride monomer in a reactor at a predetermined polymerization temperature of 45 to 70°C. The reactor is equipped with a jacket through which a heating or cooling medium is passed, for heating or cooling the reactor. The process includes steps (1) to (5), as follows.

(1) A polymer scale inhibitor is applied to at least the inner wall of the reactor.

(2) The reactor is charged with water, a suspending agent, and the vinyl chloride monomer such that the charge mixture may have a temperature of from 30°C to less than 45°C during charging/mixing.

(3) A first polymerization initiator having a temperature of at least 40°C at which its half life in a 0.1 mol/l benzene solution is 10 hours is added in an amount of 0.01 to 0.2% by weight based on the monomer. A second polymerization initiator having a temperature of lower than 40°C at which its half life in a 0.1 mol/l benzene solution is 10 hours is added in an amount of 0.001 to 0.2% by weight based on the monomer, thereby initiating polymerization at the charging/mixing temperature.

(4) A heating medium at a temperature above the charging/mixing temperature but below the predetermined polymerization temperature T plus 4°C is passed through the jacket until the contents in the reactor substantially reach the predetermined polymerization temperature. Thereafter, (5) supply of the heating medium to the jacket is interrupted. Instead, a cooling medium is passed through the jacket for effecting polymerization of the vinyl chloride monomer at the predetermined polymerization temperature.

PREFERRED AND OPTIONAL FEATURES; FURTHER EXPLANATIONS

Specific practice may be as follows. Vinyl chloride polymer is prepared by suspension polymerizing a vinyl chloride monomer in a reactor equipped with a jacket through which a heating or cooling medium is passed for heating or cooling the reactor. First of all, a polymer scale inhibitor or an agent that inhibits deposition of polymer scale is applied to at least an inner wall of the reactor, preferably further to those components of the reactor which come in contact with the monomer during polymerization, for example, agitating blades, agitating shaft, baffle, condenser, header, thermal coil, bolts and nuts. The polymer scale inhibitor may be further applied to additional components other than those components of the reactor which come in contact with the monomer during polymerization if polymeric scale can build up on such additional components, for example, the inner surface of devices and piping of a system for recovering unreacted monomer. More specifically, the inner surfaces of a monomer distillation column, condenser, monomer storage tank, and valves are coated with the scale inhibitor.

The polymer scale inhibitor or antiscalant used herein is not critical and may be selected from known inhibitors. Exemplary inhibitors are dyes, pigments, polar organic compounds, water-soluble high molecular weight compounds, nitrogenous aromatic compounds, aromatic amine compounds and iodine compounds as described in the following patents.

| JP-B-30343/1970 | | |
| --- | --- | --- |
| JP-A 50887/1976 | 76378/1976 | 12291/1977 |
| 13592/1977 | 136262/1979 | 34006/1986 |
| 31406/1986 | 138302/1990 | 47103/1990 |
| 138303/1990 | 158604/1990 | 228303/1990 |
| 115305/1991 | 115306/1991 | 115304/1990 |
| 50202/1992 | 108802/1992 | 159302/1992 |
| 328104/1992 | 342701/1992 | 328104/1992 |
| 5002/1993 | | |

Other exemplary inhibitors are condensed products of aromatic compounds as described in the following patents.

| JP-A 155201/1982 | 72902/1985 | 7309/1986 |
| --- | --- | --- |
| 18402/1987 | 273202/1987 | 54317/1980 |
| 158603/1990 | 158601/1990 | 155903/1990 |
| 202901/1990 | 158603/1990 | |

Any desired method may be employed for applying the polymer scale inhibitor to the reactor. For example, brush coating and spray coating may be used. It is also effective to fill the reactor with the polymer scale inhibitor and then empty the reactor of the inhibitor. Other useful application methods are described in the above-cited patents.

Additionally, automatic application methods are also useful as described in JP-A 61001/1982, 36288/1980 and 11303/1984 and JP-B 501116/1981 and 501117/1981.

The reactor which is lined on the inner wall with the polymer scale inhibitor is then charged with charge water, suspending agent, and a vinyl chloride monomer. During charging and mixing, temperature is from 30°C to less than 45°C, especially from 35°C to 43°C. If the mixture during charging and mixing is at a temperature below 30°C, polymerization heat may not be enough and a substantial time is taken until the predetermined polymerization temperature is reached, cancelling the effect of reducing the heating time. If the mixture during charging and mixing is at a temperature of 45°C or higher, the resulting vinyl chloride polymer may be of lower quality as demonstrated by the inclusion of more fisheyes.

In order that the charge mixture have a temperature from 30°C to less than 45°C during charging and mixing, it is effective to charge the reactor with preheated charge water. It is acceptable to additionally charge the reactor with preheated monomer. Various other means may be used to this end.

The vinyl chloride monomer used herein encompasses vinyl chloride alone and a mixture of a major proportion, typically more than 50% by weight of vinyl chloride and a minor proportion of another monomer copolymerizable therewith. Examples of the monomer copolymerizable with vinyl chloride include alpha-olefins such as ethylene, propylene, 1-butene, 1-pentene, 1-hexene, 1-heptene, 1-octene, 1-nonene, 1-decene, 1-undecene, 1-dodecene, 1-tridecene, and 1-tetradecene; acrylic acid and esters thereof such as methyl acrylate and ethyl acrylate; methacrylic acid and esters thereof such as methyl methacrylate and ethyl methacrylate; maleic acids and esters thereof; vinyl esters such as vinyl acetate and vinyl propionate; vinyl ethers such as lauryl vinyl ether and isobutyl vinyl ether; maleic anhydride; acrylonitrile; styrene; and vinylidene chloride; and other monomers copolymerizable with vinyl chloride, alone or in admixture of two or more.

The suspending agent used for suspension polymerization may be selected from those conventionally used in polymerization of vinyl chloride monomers, for example, water-soluble cellulose ethers such as methyl cellulose, hydroxyethyl cellulose, hydroxypropyl cellulose, and hydroxypropylmethyl cellulose and water-soluble polymers such as partially saponified polyvinyl alcohol, acrylic acid polymer, and gelatin. They may be used alone or in admixture of two or more. In combination with the suspending agent, there can be used any of nonionic emulsifiers (e.g., sorbitan monolaurate, sorbitan trioleate, glycerin tristearate, and ethylene oxide-propylene oxide block copolymer) and anionic emulsifiers (e.g., polyoxyethylene sorbitan monolarate, polyoxyethylene glycerin oleate, and sodium laurate).

The suspending agent is preferably added in an amount of about 0.01 to 0.3%, more preferably about 0.02 to 0.15% by weight of the monomer charge.

In the preferred practice, two polymerization initiators are added to the mixture of water, suspending agent, and vinyl chloride monomer for causing the monomer to initiate polymerization in the charge mixture.

A first polymerization initiator having a temperature of at least 40°C at which its half life in a 0.1 mol/l benzene solution is 10 hours and a second polymerization initiator having a temperature of lower than 40°C at which its half life in a 0.1 mol/l benzene solution is 10 hours are added to the mixture, thereby initiating polymerization at the charging/mixing temperature.

A preferred aspect prescribes at least 5°C difference in said temperatures for the first and second initiators.

The measurement of the half-life temperature is described. The half life of a polymerization initiator is a convenient index indicating the rate of decomposition of an organic peroxide at a certain temperature and is represented by the time taken during decomposition of the peroxide until its active oxygen quantity reaches one-half.

More specifically, a peroxide is dissolved in benzene solvent to prepare a solution having a peroxide concentration of 0.1 mol/l. The solution is sealingly contained in a glass tube purged with nitrogen. The glass tube is immersed in a constant temperature bath set at a predetermined temperature. Under the conditions, the peroxide is thermally decomposed. This reaction is regarded as approximately a primary reaction. Given that $x$ is an amount of organic peroxide decomposed, $k$ is a decomposition rate constant, $t$ is a time, and $a$ is an initial concentration of organic peroxide, these parameters are correlated as shown by the following equations (1) and (2).

$$dx/dt = k(a - x) \qquad (1)$$

$$\ln a/(a-x) = kt \qquad (2)$$

Since the half life is the time taken until the concentration of organic peroxide is decreased by decomposition to one-half of the initial concentration, it is represented by $t_{1/2}$. When $a/2$ is substituted for $x$ in equation (2), then equation (3) results.

$$kt_{1/2} = \ln 2 \qquad\qquad (3)$$

Accordingly, when a selected organic peroxide is thermally decomposed at a certain temperature, the half life $t_{1/2}$ at the temperature can be determined from equation (3) by plotting values of $\ln a/(a-x)$ relative to time t to draw a straight line and determining k from the gradient of the line.

In accordance with this procedure, the temperature at which the half life of a polymerization initiator in a 0.1 mol/l benzene solution is 10 hours is determined. This temperature is simply referred to as a 10-hour half-life temperature.

The first polymerization initiator has a 10-hour half-life temperature of at least 40°C, preferably 40 to 60°C. Examples of the first polymerization initiator include perester compounds such as t-hexylperoxyneodecanoate (10-hour half-life temperature 45°C), t-butylperoxyneodecanoate (46°C), t-hexylperoxyneohexanoate (49°C), and t-butylperoxyneoheptanoate (50°C); percarbonate compounds such as diisopropylperoxydicarbonate (41°C), di-n-propylperoxydicarbonate (41°C), dimyristylperoxydicarbonate (41°C), and di-2-ethylhexylperoxydicarbonate (43°C); azo compounds such as 2,2'-azobisisobutyronitrile (65°C) and 2,2'-azobis-2,4-dimethylvaleronitrile (51°C); and diacyl compounds such as 3,5,5-trimethylhexanoylperoxide (60°C). Among others, perester, percarbonate and diacyl compounds are preferred, with the perester compounds being especially preferred. Most preferred are t-butylperoxyneoheptanoate, t-butylperoxyneodecanoate, di-2-ethylhexylperoxydicarbonate, and 3,5,5-trimethylhexanoylperoxide.

The first polymerization initiator is in an amount of 0.01 to 0.2%, preferably 0.03 to 0.1% by weight based on the monomer charge. With less than 0.01% by weight of the first initiator on this basis, a long time may be taken for polymerization until an appropriate degree of polymerization, typically of about 80% or higher, is reached and in some cases, such an appropriate degree of polymerization is not reached. With more than 0.2% by weight of the first initiator, polymerization reaction may proceed so rapidly particularly from middle to last stages of polymerization that the resultant large amount of heat of polymerization cannot be fully removed by the cooling means, resulting in difficult control of the internal temperature which may allow runaway reaction to occur.

The second polymerization initiator is one whose temperature at which its half life in a 0.1 mol/l benzene solution is 10 hours, designated 10-hour half-life temperature, is lower than 40°C, preferably up to 39°C. Examples of the second polymerization initiator include peroxide compounds such as isobutyrylperoxide (10-hour half-life temperature 32°C) and acetylcyclohexylsulfonylperoxide (26.5°C), perester compounds such as cumylperoxyneodecanoate (36°C), cyclohexylbenzeneperoxyneodecanoate (31°C), and 1,1,3,3-tetramethylbutylperoxyneodecanoate (39°C), and percarbonate compounds such as diallylperoxycarbonate (39°C). Preferred among others are cumylperoxyneodecanoate and isobutyrylperoxide.

Importantly a significant proportion, most or all of the heating to the predetermined polymerization temperature of the mixture charged into the reactor at a temperature of from 30°C to less than 45°C is provided by heat resulting from polymerization by the second polymerization initiator. Since the charge mixture to be heated to the predetermined polymerization temperature is at a relatively low temperature, heat of polymerization is generated mainly due to the presence of the second polymerization initiator which is active at lower temperature.

From this point of view, the second polymerization initiator is in an amount of 0.001 to 0.2%, especially 0.01 to 0.05% by weight based on the monomer charge. With less than 0.001% by weight of the second initiator on this basis, heat of polymerization us usually insufficient for heating and the heating time becomes longer, failing to achieve the purpose of reducing the heating time. With more than 0.2% by weight of the second initiator, polymerization may proceed so rapidly particularly at an initial stage of polymerization that the resultant large amount of heat of polymerization cannot be fully removed by the cooling medium being passed through the jacket, resulting in difficult control of the internal temperature which may allow runaway reaction to occur.

It is not critical how to add the first and second polymerization initiators to the polymerization system. Exemplary preferred procedures are by diluting them with a solvent and by dispersing them in water to form an emulsion. After the reactor is charged with water, suspending agent and monomer, such a dilution or emulsion of the initiators is pumped into the reactor.

According to the present teachings, heat of reaction resulting from polymerization, which substantially initiates after admission of the polymerization initiators, is used for heating the charge mixture to the predetermined polymerization temperature. Heating medium is also passed through a jacket around the reactor for heating the contents of the reactor. The heating medium has a temperature below the predetermined polymerization temperature plus 4°C. If the temperature of the heating medium passed through the jacket for heating is below the charging/mixing temperature, the medium will remove heat from the charge mixture through the jacket, undesirably extending the heating time. If the temperature of the heating medium exceeds the predetermined polymerization temperature by more than 4°C, polymer scale may build up and the resulting vinyl chloride polymer will contain more fisheyes.

The predetermined polymerization temperature is in the range from 45 to 70°C as previously mentioned, preferably from 50 to 70°C, more preferably from 55 to 70°C. Within such a preferred temperature range, the effect of reducing the heating time becomes more prominent.

More preferably, as the temperature of the charge mixture increases, the temperature of the applied heating is increased within the range between the temperature of the charge mixture being heated and the predetermined polymerization temperature + 4°C.

Supply of the heating medium to the jacket is continued until the charge mixture substantially reaches the predetermined polymerization temperature. More particularly, supply of the heating medium is continued to a point of time between arrival at the predetermined polymerization temperature and about 10 minutes before that arrival although the exact time varies with a heating situation which depends on the interior volume of the reactor, the amount and type of the charge mixture, heating rate, etc.

By virtue of the above-mentioned heating procedure, processes disclosed herein enable use of a large size reactor having an interior volume of at least 30 $m^3$, preferably at least 60 $m^3$, more preferably at least 80 $m^3$. Even when such a large size reactor is used, the heating time can be reduced as compared with the conventional processes. Because the proportion of the heat transfer area of the jacket relative to the charge mixture decreases as the interior volume of reactor increases, the conventional processes relying on only the jacket heating is decreased in the effect of the jacket reducing the heating time. In contrast, processes disclosed herein have the advantage that since heat of polymerization is additionally utilized for heating of the charge mixture, the effect of reducing the heating time becomes more significant as the interior volume of reactor increases.

In general, the heat transfer efficiency of a jacket relative to the interior volume of reactor is shown in Table 1 as expressed by the heat transfer area of the jacket per unit volume, S/V.

Table 1

| Interior volume (V $m^3$) | 2 | 30 | 60 | 80 | 130 |
|---|---|---|---|---|---|
| Jacket heat transfer area (S $m^2$) | 8.6 | 51 | 79 | 92 | 125 |
| Jacket heat transfer efficiency (S/V $m^2/m^3$) | 4.30 | 1.70 | 1.32 | 1.15 | 0.96 |

Once the charge mixture reaches the predetermined polymerization temperature in this way, polymerization is effected at that predetermined polymerization temperature while passing a cooling medium through the jacket. Note that polymerization subsequent to the arrival at the predetermined polymerization temperature can be carried out in the same manner as the well-known suspension polymerization processes. As is conventional, any of optional polymerization aids including a polymerization regulator, chain transfer agent, pH adjusting agent, gelation adjusting agent, and anti-static agent may be added if necessary. It is acceptable that such additives are previously added at the time of initial charging.

It therefore becomes possible to solve the problem that conventional processes for preparing vinyl chloride polymers fail to reduce the time of heating a charge mixture in a large size reactor without any influence on the quality of polymers and without substantial buildup of polymer scale in the reactor. Even when a vinyl chloride polymer is prepared in a large size reactor, our process can effectively reduce the heating time and is successful in preparing a high quality vinyl chloride polymer with minimal fisheyes at high efficiency while suppressing buildup of polymer scale in the reactor.

EXAMPLE

Examples of the present invention are given below by way of illustration.

Example 1

The reactor used for suspension polymerization of vinyl chloride monomer was a stainless steel reactor having an interior volume of 2 $m^3$ equipped with a jacket, baffle, and stirrer.

A polymer scale inhibitor in the form of a dye C.I. Solvent Black 3 was dissolved in methanol in a concentration of 0.5% by weight. This methanol solution of C.I. Solvent Black 3 was applied to the regions of the reactor to come in contact with the monomer including the inner wall and stirrer, followed by drying.

The reactor was charged with 884 kg of deionized water at 46.5°C. Then 10 kg of an aqueous solution containing 212 g of water-soluble partially saponified polyvinyl alcohol and 141 g of water-soluble cellulose ether as suspending agents was admitted into the reactor and stirred. The reactor interior was evacuated to a vacuum of 50 mmHg. With stirring, the reactor was charged with 707 kg of vinyl chloride monomer at 23.5°C to form a mixture. At the end of charging of vinyl chloride monomer, the mixture had a temperature of 39.7°C.

After the charging of vinyl chloride monomer, with the mixture being stirred, 808.0 g of an isoparaffin solution containing 403.0 g of t-butylperoxyneodecanoate as the first polymerization initiator and 162.6 g of cumylperoxyneodecanoate as the second polymerization initiator was pumped into the reactor to complete a charge mixture. Polymerization initiated immediately whereas the predetermined polymerization temperature was 56°C.

At the same time as the polymerization initiators were pumped into the reactor, heating water at 56°C was passed through the jacket for raising the temperature of the charge mixture, referred to as an internal temperature, hereinafter. In proximity to the end of temperature rise, the heating water was switched to cooling water. While the cooling water was passed through the jacket to maintain the internal temperature at 56°C, polymerization was continued. When the internal pressure of the reactor dropped to 5.5 kg/cm$^2$G, 106 g of bisphenol-A was admitted to interrupt polymerization.

At the end of polymerization, the unreacted monomer was recovered from the reactor. The resulting polymer slurry was removed from the reactor, dewatered, and dried, obtaining the polymer.

Comparative Example 1

A vinyl chloride polymer was prepared by the same procedure as in Example 1 except that heating water at 61°C was passed through the jacket for the heating purpose.

Comparative Example 2

A vinyl chloride polymer was prepared by the same procedure as in Example 1 except that heating water at 70°C was passed through the jacket for the heating purpose.

Comparative Example 3

A vinyl chloride polymer was prepared by the same procedure as in Example 1 except that the reactor was charged with deionized water at 53.4°C.

Comparative Example 4

A vinyl chloride polymer was prepared by the same procedure as in Example 1 except that 808 g of an isoparaffin solution containing only 565.6 g of t-butylperoxyneodecanoate as the first polymerization initiator was added.

Example 2

The reactor used for suspension polymerization of vinyl chloride monomer was a stainless steel reactor having an interior volume of 80 m$^3$ equipped with a jacket, reflux condenser, baffle, and stirrer.

The same polymer scale inhibitor as in Example 1 was similarly applied to the regions of the reactor to come in contact with the monomer including the reactor inner wall, condenser inner wall and stirrer.

The reactor was charged with 35.5 t of deionized water at 46°C. Then 300 kg of an aqueous solution containing 10.7 kg of water-soluble partially saponified polyvinyl alcohol and 4.6 kg of water-soluble cellulose ether as suspending agents was admitted into the reactor and stirred. The reactor interior was evacuated to a vacuum of 50 mmHg. With stirring, the reactor was charged with 30.5 t of vinyl chloride monomer at 23°C to form a mixture. At the end of charging of vinyl chloride monomer, the charge mixture had a temperature of 40.2°C.

After the charging of vinyl chloride monomer, with the mixture being stirred, 34.87 kg of an isoparaffin solution containing 17.39 kg of t-butylperoxyneodecanoate as the first polymerization initiator and 7.02 kg of cumylperoxyneodecanoate as the second polymerization initiator was pumped into the reactor to complete a charge mixture. Polymerization initiated immediately whereas the predetermined polymerization temperature was 56°C.

At the same time as the polymerization initiators were pumped into the reactor, heating water at 56°C was passed through the jacket for raising the internal temperature. In proximity to the end of temperature rise, cooling water was passed through the jacket instead of the heating water. After 20 minutes from the arrival of the internal temperature at 56°C, heat removal by the reflux condenser was started. While the internal temperature was maintained at 56°C in this way, polymerization was continued. When the internal pressure of the reactor dropped to 5.5 kg/cm$^2$G, 4.58 kg of bisphenol-A was admitted to interrupt polymerization.

At the end of polymerization, the unreacted monomer was recovered from the reactor. The resulting polymer slurry was removed from the reactor, dewatered, and dried, obtaining the polymer.

Comparative Example 5

A vinyl chloride polymer was prepared by the same procedure as in Example 2 except that heating water at 61°C was passed through the jacket for the heating purpose.

Comparative Example 6

A vinyl chloride polymer was prepared by the same procedure as in Example 2 except that heating water at 70°C was passed through the jacket for the heating purpose.

Comparative Example 7

A vinyl chloride polymer was prepared by the same procedure as in Example 2 except that heating water at 90°C was passed through the jacket for the heating purpose.

Example 3

A vinyl chloride polymer was prepared by the same procedure as in Example 2 except that the heating water passed through the jacket for the heating purpose was always maintained above the internal temperature being raised as shown in Table 2 until nearly the end of temperature rise.

Table 2

| Time (min.) | Jacket heating water temperature (°) | Internal temperature (°C) |
| --- | --- | --- |
| 0 | 48.1 | 40.0 |
| 5 | 48.9 | 41.8 |
| 10 | 50.1 | 43.8 |
| 15 | 51.3 | 45.7 |
| 20 | 52.5 | 47.8 |
| 25 | 54.0 | 49.8 |
| 30 | 55.0 | 51.7 |
| 35 | 55.8 | 53.7 |
| 41 | 50.0 | 56.0 |

Comparative Example 8

A vinyl chloride polymer was prepared by the same procedure as in Example 2 except that 34.86 kg of an isoparaffin solution containing only 24.40 kg of t-butylperoxyneodecanoate as the first polymerization initiator was added.

Comparative Example 9

A vinyl chloride polymer was prepared by the same procedure as in Example 2 except that the reactor was charged with 35.5 t of deionized water at 31.5°C.

Each of the polymerization procedures mentioned above was repeated 20 runs. At the end of the 20-th run, the interior of the reactor was observed for polymer scale buildup according to the evaluation method described below. Also the vinyl chloride polymer resulting from the 20-th run was determined for fisheyes by the method described below. The results are shown in Table 3 together with other average data of the polymers.

It is to be noted that as to Comparative Examples 3, 4, 8 and 9, the observation of polymer scale buildup and determination of fisheyes were done at the end of the first run.

In Table 3, the heating time was a time taken from the end of admission of polymerization initiator to the arrival at the predetermined polymerization temperature. The polymerization time was a time taken from the arrival at the predetermined polymerization temperature to the end of polymerization. BND is t-butylperoxyneodecanoate and CND is cumylperoxyneodecanoate.

Observation of polymer scale buildup

At the end of polymerization, the interior of the reactor was observed for polymer scale buildup and evaluated according to the following rating.

A: no polymer scale buildup, reactor inner wall had a gloss of metallic mirror surface
B: perceivable cloud on the metallic mirror surface of reactor inner wall
C: local polymer scale buildup on the metallic mirror surface of reactor inner wall

Determination of fisheyes

A mixture of 100 parts of the vinyl chloride polymer, 1 part of tribasic lead sulfate, 1.5 parts of lead stearate, 0.2 part of titanium oxide, 0.1 part of carbon black, and 50 parts of DOP, all in parts by weight, was milled on a roll mill at 145°C for 5 minutes to form a sheet of 0.2 mm thick. The number of white transparent particles or fisheyes in a 100-cm$^2$ area of the sheet was counted. The size of fisheyes was classified as follows.
Large: 0.4 mm or larger
Medium: 0.2 mm to < 0.4 mm
Small: visual observation limit to < 0.2 mm
An overall rating of: good (O), fair (Δ) or bad (X) was given for fisheyes.

## Table 3

| | E1 | CE1 | CE2 | CE3 | CE4 | E2 |
|---|---|---|---|---|---|---|
| Reactor interior volume ($m^3$) | 2 | 2 | 2 | 2 | 2 | 80 |
| Jacket heating water temp. (°C) | 56 | 61 | 70 | 56 | 56 | 56 |
| Charge mixture temp. (°C) | 39.7 | 39.9 | 39.5 | 45.4 | 40.1 | 40.2 |
| Amount of initiator added | | | | | | |
|     BND (wt%) | 0.057 | 0.057 | 0.057 | 0.057 | 0.080 | 0.057 |
|     CND (wt%) | 0.023 | 0.023 | 0.023 | 0.023 | - | 0.023 |
| Predetermined polymerization temperature (°C) | 56 | 56 | 56 | 56 | 56 | 56 |
| Heating time (min.) | 28 | 21 | 14 | 22 | 30 | 35 |
| Polymerization time (min.) | 229 | 235 | 240 | 232 | 236 | 226 |
| Polymer scale buildup, batch | 20th | 20th | 20th | 1st | 1st | 20th |
|     Rating | A | B | B-C | A | A | A |
| Fisheyes, Large | 0 | 0 | 2 | 1 | 0 | 0 |
|     Medium | 0 | 2 | 7 | 5 | 0 | 0 |
|     Small | 2 | 7 | 30 | 22 | 4 | 3 |
|     Rating | O | Δ | X | X | O | O |

## Table 3 (cont'd)

| | CE5 | CE6 | CE7 | E3 | CE8 | CE9 |
|---|---|---|---|---|---|---|
| Reactor interior volume ($m^3$) | 80 | 80 | 80 | 80 | 80 | 80 |
| Jacket heating water temp. (°C) | 61 | 70 | 90 | see Table 2 | 56 | 56 |
| Charge mixture temp. (°C) | 39.8 | 40.3 | 40.0 | 40.0 | 39.7 | 28.5 |
| Amount of initiator added | | | | | | |
|     BND (wt%) | 0.057 | 0.057 | 0.057 | 0.057 | 0.080 | 0.057 |
|     CND (wt%) | 0.023 | 0.023 | 0.023 | 0.023 | - | 0.023 |
| Predetermined polymerization temperature (°C) | 56 | 56 | 56 | 56 | 56 | 56 |
| Heating time (min.) | 31 | 24 | 16 | 41 | 42 | 56 |
| Polymerization time (min.) | 229 | 234 | 242 | 221 | 231 | 242 |
| Polymer scale buildup, batch | 20th | 20th | 20th | 20th | 1st | 1st |
|     Rating | A·B | B | C | A | A | A |
| Fisheyes, Large | 0 | 1 | 5 | 0 | 0 | 0 |
|     Medium | 3 | 4 | 14 | 0 | 0 | 0 |
|     Small | 8 | 25 | 72 | 2 | 3 | 1 |
|     Rating | Δ | X | X | O | O | O |

As is evident from Table 3, use of our proposals can effectively reduce the heating time required to raise the internal temperature to the predetermined polymerization temperature, especially in a larger size reactor. Although the heating time is reduced, a high quality vinyl chloride polymer with minimal fisheyes can be prepared while suppressing buildup of polymer scale. In Example 3 wherein the temperature of the heating water passed through the jacket was increased as the internal temperature rose, the heating time was somewhat longer, but the polymerization time was shorter, achieving an improvement in overall productivity.

In contrast, in Comparative Examples 1, 2 and 5 to 7 wherein the temperature of the heating water passed through the jacket was higher than the predetermined polymerization temperature + 4°C, it was seen that as the temperature of heating water was higher, the heating time was shorter, but the polymer scale buildup became worse in a proportional manner and fisheyes increased. In Comparative Example 3 wherein the mixture resulting from charging and mixing of vinyl chloride monomer and other ingredients had a temperature higher than 45°C, the heating time became shorter, but fisheyes increased drastically. In Comparative Example 9 wherein the mixture resulting from charging and mixing of vinyl chloride monomer and other charges had a temperature lower than 30°C, the heating time became longer. In Comparative Examples 4 and 8 wherein only the first polymerization initiator was used, but not the second polymerization initiator, both the heating and polymerizing times became longer, resulting in low productivity.

**Claims**

**1.** A process for preparing a vinyl chloride polymer by suspension polymerizing a vinyl chloride monomer in a reactor at a predetermined polymerization temperature T of 45 to 70°C, said reactor being equipped with a jacket through which a heating or cooling medium is passed for heating or cooling the reactor, comprising the steps of:

(1) applying a polymer scale inhibitor to at least the inner wall of the reactor,
(2) charging the reactor with water, a suspending agent, and the vinyl chloride monomer such that the resulting mixture has a charging/mixing temperature of at least 30°C but less than 45°C,
(3) adding polymerization initiator,
(4) passing a heating medium through said jacket until the contents in the reactor substantially reach said predetermined polymerization temperature T, and
(5) thereafter, interrupting supply of the heating medium to said jacket and passing a cooling medium through said jacket so that polymerization of the vinyl chloride monomer takes place at said predetermined polymerization temperature T;

characterised in that
the polymerization initiator is

- 0.01 to 0.2 wt%, based on said monomer, of a first polymerization initiator having a half-life temperature of at least 40°C, and
- 0.001 to 0.2 wt%, based on said monomer, of a second polymerization initiator having a half-life temperature less than 40°C and which initiates polymerization at the charging/mixing temperature; "half-life temperature" being the temperature at which the half-life of the initiator in a 0.1 mo$\ell$/$\ell$ benzene solution is 10 hours;

and in that
for step (4) the heating medium is at a temperature between the charging/mixing temperature and T+4°C.

**2.** A process of claim 1 wherein in charging step (2), the mixture has a temperature of 35°C to 43°C.

**3.** A process of claim 1 or 2 wherein in charging step (2), the suspending agent is added in an amount of from 0.01 to 0.3% by weight of the monomer charge.

**4.** A process of any one of claims 1 to 3 wherein the first polymerization initiator has a half-life temperature of 40 to 60°C.

**5.** A process of any one of the preceding claims wherein the first polymerization initiator is selected from perester, percarbonate, azo and diacyl compounds.

**6.** A process of claim 5 wherein the first polymerization initiator is selected from perester, percarbonate and diacyl compounds.

**7.** A process of claim 6 wherein the first polymerization initiator is a perester compound.

**8.** A process of any one of the preceding claims wherein the second polymerization initiator has a half-life temperature not more than 39°C.

**9.** A process of any one of the preceding claims wherein the second polymerization initiator is selected from peroxide, perester and percarbonate compounds.

**10.** A process of claim 9 wherein the second polymerization initiator is cumylperoxyneodecanoate or isobutyryl peroxide.

**11.** A process of any one of the preceding claims wherein the amount of the second polymerization initiator is from 0.01 to 0.05 wt% based on the monomer.

**12.** A process of any one of the preceding claims wherein the reactor has an interior volume of at least 30 $m^3$.

**13.** A process of claim 12 wherein the reactor has an interior volume of at least 60 $m^3$.

**14.** A process of claim 13 wherein the reactor has an interior volume of at least 80 $m^3$.

**15.** A process of any one of the preceding claims wherein the predetermined polymerization temperature T is in the range from 50 to 70°C.

**16.** A process of claim 15 wherein the predetermined polymerisation temperature T is in the range from 55 to 70°C.

**17.** A process of any one of the preceding claims wherein the temperature of the heating medium is progressively increased during step (4), but remains between the temperature of the charge mixture and T + 4°C.

**Patentansprüche**

**1.** Verfahren zur Herstellung eines Vinylchlorid-Polymers durch Suspensionspolymerisation eines Vinylchlorid-Monomers in einem Reaktor bei einer vorbestimmten Polymerisationstemperatur T von 45 bis 70 °C, wobei der Reaktor mit einem Mantel ausgestattet ist, durch den ein Heiz- oder Kühlmedium hindurchgeleitet wird, um den Reaktor zu beheizen oder zu kühlen, folgende Schritte umfassend:

(1) Aufbringen eines polymeren Kesselsteinhemmers zumindest auf die Innenwand des Reaktors,
(2) Befüllen des Reaktors mit Wasser, einem Suspensionsmittel und dem Vinylchlorid-Monomer, so dass das resultierende Gemisch eine Befüll-/Misch-Temperatur von zumindest 30 °C, aber weniger als 45 °C aufweist,
(3) Zugabe von Polymerisationsinitiator,
(4) Hindurchleiten eines Heizmediums durch den Mantel, bis der Inhalt des Reaktors die vorbestimmte Polymerisationstemperatur T im wesentlichen erreicht, und
(5) das anschließende Unterbrechen der Zufuhr des Heizmediums in den Mantel, so dass Polymerisation des Vinylchlorid-Monomers mit der vorbestimmten Polymerisationstemperatur T erfolgt;

dadurch gekennzeichnet, dass
der Polymerisationsinitiator besteht in:

- 0,01 bis 0,2 Gew.-%, bezogen auf das Monomer, eines ersten Polymerisationsinitators mit einer Halbwertstemperatur von zumindest 40 °C, und
- 0,001 bis 0,2 Gew.-%, bezogen auf das Monomer, eines zweiten Polymerisationsinitiators mit einer Halbwertstemperatur von weniger als 40 °C, der die Polymerisation bei der Befüll-/Misch-Temperatur initiiert; wobei die "Halbwertstemperatur" jene Temperatur ist, bei der die Halbwertszeit des Initiators in einer Benzollösung mit 0,1 Mol/l 10 h beträgt;

und dadurch, dass
für Schritt (4) das Heizmedium eine Temperatur zwischen der Befüll-/Misch-Temperatur und T + 4 °C aufweist.

**2.** Verfahren nach Anspruch 1, worin das Gemisch im Befüllschritt (2) eine Temperatur von 35 °C bis 43 °C besitzt.

**3.** Verfahren nach Anspruch 1 oder 2, worin das Suspendiermittel im Befüllschritt (2) in einer Menge von 0,01 bis 0,3 Gew.-% der Monomerladung zugegeben wird.

**4.** Verfahren nach einem der Ansprüche 1 bis 3, worin der erste Polymerisationsinitiator eine Halbwertstemperatur von 40 bis 60 °C aufweist.

**5.** Verfahren nach einem der vorangegangenen Ansprüche, worin der erste Polymerisationsinitiator aus Perester-, Percarbonat-, Azo- und Diacylverbindungen ausgewählt ist.

**6.** Verfahren nach Anspruch 5, worin der erste Polymerisationsinitator aus Perester-, Percarbonat- und Diacylverbindungen ausgewählt ist.

**7.** Verfahren nach Anspruch 6, worin der erste Polymerisationsinitiator eine Peresterverbindung ist.

**8.** Verfahren nach einem der vorangegangenen Ansprüche, worin der zweite Polymerisationsinitiator eine Halbwertstemperatur von nicht mehr als 39 °C aufweist.

**9.** Verfahren nach einem der vorangegangenen Ansprüche, worin der zweite Polymerisationsinitiator aus Peroxid-, Perester- und Percarbonatverbindungen ausgewählt ist.

**10.** Verfahren nach Anspruch 9, worin der zweite Polymerisationsinitiator Cumylperoxyneodecanat oder Isobutyrylperoxid ist.

**11.** Verfahren nach einem der vorangegangenen Ansprüche, worin die Menge des zweiten Polymerisationsinitators 0,01 bis 0,05 Gew.-%, bezogen auf das Monomer, beträgt.

**12.** Verfahren nach einem der vorangegangenen Ansprüche, worin der Reaktor ein Innenvolumen von zumindest 30 $m^3$ aufweist.

**13.** Verfahren nach Anspruch 12, worin der Reaktor ein Innenvolumen von zumindest 60 $m^3$ aufweist.

**14.** Verfahren nach Anspruch 13, worin der Reaktor ein Innenvolumen von zumindest 80 $m^3$ aufweist.

**15.** Verfahren nach einem der vorangegangenen Ansprüche, worin die vorbestimmte Polymerisationstemperatur T im Bereich von 50 bis 70 °C liegt.

**16.** Verfahren nach Anspruch 15, worin die vorbestimmte Polymerisationstemperatur T im Bereich von 55 bis 70 °C liegt.

**17.** Verfahren nach einem der vorangegangenen Ansprüche, worin die Temperatur des Heizmediums im Verlauf von Schritt (4) allmählich erhöht wird, aber zwischen der Temperatur des Chargengemisches und T+4 °C bleibt.

**Revendications**

**1.** Procédé pour la préparation d'un polymère de chlorure de vinyle par polymérisation en suspension d'un monomère de chlorure de vinyle dans un réacteur à une température prédéterminée de polymérisation T de 45 à 70°C, ledit réacteur étant équipé d'une chemise à travers laquelle un fluide chauffant ou refroidissant passe pour chauffer ou refroidir le réacteur, comprenant les étapes de :

(1) appliquer un inhibiteur de tartre du polymère au moins à la paroi interne du réacteur,
(2) charger le réacteur d'eau, d'un agent de suspension et du monomère de chlorure de vinyle de façon que le mélange résultant soit à une température de charge/mélange d'au moins 30°C mais de moins de 45°C,
(3) ajouter l'initiateur de polymérisation,
(4) faire passer un fluide chauffant à travers ladite chemise jusqu'à ce que les contenus dans le réacteur atteignent sensiblement ladite température prédéterminée de polymérisation T, et

(5) ensuite, interrompre la fourniture du fluide chauffant à ladite chemise et faire passer un fluide de refroidissement à travers ladite chemise de façon que la polymérisation du monomère de chlorure de vinyle ait lieu à ladite température prédéterminée de polymérisation T ;

caractérisé en ce que
l'initiateur de polymérisation est

- 0,01 à 0,2 % en poids, en se basant sur ledit monomère, d'un premier initiateur de polymérisation ayant une température de demi-vie d'au moins 40°C, et
- 0,001 à 0,2 % en poids, en se basant sur ledit monomère, d'un second initiateur de polymérisation ayant une température de demi-vie de moins de 40°C et qui amorce la polymérisation à la température de charge/ mélange ; la "température de demi-vie" étant la température à laquelle la demi-vie de l'initiateur dans une solution à 0,1 mo$\ell$/$\ell$ de benzène est de 10 heures ;

et en ce que
pour l'étape (4), le fluide chauffant est à une température entre la température de charge/mélange et T+4°C .

2. Procédé de la revendication 1 où à l'étape de charge (2), le mélange a une température de 35 à 43°.

3. Procédé de la revendication 1 ou 2 où à l'étape de charge (2), l'agent de suspension est ajouté en une quantité de 0,01 à 0,3 % en poids de la charge du monomère.

4. Procédé selon l'une des revendications 1 à 3 où le premier initiateur de polymérisation a une température de demi-vie de 40 à 60°C.

5. Procédé selon l'une des revendications précédentes où le premier initiateur de polymérisation est sélectionné parmi des composés perester, percarbonate,azo et diacyle .

6. Procédé de la revendication 5 où le premier initiateur de polymérisation est sélectionné parmi des composés perester, percarbonate et diacyle .

7. Procédé de la revendication 6 où le premier initiateur de polymérisation est un composé perester .

8. Procédé selon l'une des revendications précédentes où le second initiateur de polymérisation a une température de demi-vie de pas plus de 39°C .

9. Procédé selon l'une des revendications précédentes où le second initiateur de polymérisation est sélectionné parmi des composés peroxyde, perester et percarbonate .

10. Procédé de la revendication 9 où le second initiateur de polymérisation est le cumyl-peroxynéodécanoate ou le peroxyde d'isobutyryle .

11. Procédé selon l'une des revendications précédentes où la quantité du second initiateur de polymérisation est de 0,01 à 0,05 % en poids en se basant sur le monomère .

12. Procédé selon l'une des revendications précédentes où le réacteur a un volume intérieur d'au moins 30 m$^3$.

13. Procédé de la revendication 12 où le réacteur a un volume intérieur d'au moins 60 m$^3$.

14. Procédé de la revendication 13 où le réacteur a un volume intérieur d'au moins 80 m$^3$.

15. Procédé selon l'une des revendications précédentes où la température prédéterminée de polymérisation T est dans la gamme de 50 à 70°C .

16. Procédé de la revendication 15 où la température prédéterminée de polymérisation T est dans la gamme de 55 à 70°C .

17. Procédé selon l'une quelconque des revendications précédentes où la température du fluide chauffant est progressivement augmentée pendant l'étape (4) mais reste entre la température du mélange de charge et T+4°C.